# EUROPEAN PATENT APPLICATION

(11) **EP 0 578 141 A2**
(43) Date of publication of application: **12.01.1994**
(21) Application number: 93110558.9
(22) Date of filing: 02.07.1993
(51) Int. Cl.: H04N 3/27, H04N 3/22, H04N 5/44

(54) **Vertical deflection arrangement for zoom pan features**

(30) Priority: 10.07.1992 US 911421
(71) Applicant: THOMSON CONSUMER ELECTRONICS, INC., Indianapolis Indiana 46206 (US)
(72) Inventor: Wilber, James Albert, Indianapolis, Indiana 46219 (US); Lendaro, Jeffrey Basil, Indiana 46060 (US)
(74) Representative: Einsel, Robert, Dipl.-Ing.

(57) **Abstract**

A vertical synchronization signal (SYNC, Fig. 2c) is delayed by a selectable amount (TD, Fig. 2e) to produce a delayed vertical synchronization signal (VRESET, Fig. 2c). The delayed signal causes a beginning of a trace portion of a vertical deflection current (iy, Fig. 3a) to be delayed relative to a video signal (SNTSC, Fig. 3d). The delayed beginning time provides a top panning feature. Synchronization information for the vertical deflection current is obtained from the delayed synchronization signal on a field-by-field basis. The video signal contains a field (301, Fig. 3d) that provides picture information presently displayed on a screen of a cathode ray tube. The synchronization information (VRESET, Fig. 2c) is derived from a vertical synchronization pulse (SYNC, Fig. 3d) of the undelayed vertical synchronization signal that occurs immediately prior to the field and that is associated with the field.

## Description

The invention relates to a video display deflection apparatus.

Typical video displays currently available to consumers have a format display or aspect ratio of 4 x 3, whereas the format display ratio of video production varies widely. If an aspect ratio greater than 4 x 3 is used for video production, an aspect ratio conversion is performed before display on a consumer television. A wide screen television as described, for example, in published International Application No. PCT/US 91/03 822, entitled WIDESCREEN TELEVISION, the inventors being Rodriguez-Cavazos, et al., may have a format display ratio of 16 x 9.

It may be desirable to display a baseband video signal conforming to, for example, the NTSC standard, defining a picture with the aspect ratio of 4 x 3, in a display such as that of the aforementioned wide screen television. To that end, the vertical displacement for a given number of horizontal video lines is expanded or zoomed by a factor of 4/3 relative to the vertical displacement when the video lines define a picture with the 16 x 9 aspect ratio. Consequently, about 1/4 of the height of the picture is "cropped".

Typically, a ramping vertical trace portion of a sawtooth signal is applied via an amplifier operating in a closed-loop negative feedback manner to control a ramping vertical trace portion of a vertical deflection current. The sawtooth signal is synchronized to vertical sync pulses of the video signal. Vertical zoom may be achieved by increasing the rate of change of the ramping vertical trace portion of the vertical deflection current relative to the rate of change in a normal mode of operation.

It may also be desirable to provide the user with the flexibility to select the extent or degree by which the top and bottom portions of the picture are cropped. This is so because picture content may dictate that more of the top than the bottom be cropped, or vice versa. For example, if all action in a picture scene is at ground level, a viewer might prefer to crop more sky. Thus, vertical panning enables the viewer to choose which part of the zoomed picture will be shown and which part will be cropped. When a smaller portion of the picture is cropped at the top of the picture, the panning operation is referred to herein as top panning. In the extreme case, the entire top of the picture is displayed at the expense of the bottom of the picture, referred to herein as maximum top panning. When a smaller portion of the picture is cropped at the bottom of the picture, the panning operation is referred to herein as bottom panning. Panning may be achieved, for example, by time-shifting the ramping vertical trace portion of the sawtooth signal relative to the video signal by a controllable amount in accordance with the degree of panning that is required.

In the aforementioned Rodriguez-Cavazos et al., arrangement, a vertical trace portion of a given period of the deflection current or of the sawtooth signal is synchronized to a reset pulse that is produced from the vertical synchronization pulses. To obtain top panning, the reset pulse occurs prior to the vertical synchronization pulse that is associated with the picture presently displayed during the given period. Thus, the vertical synchronization pulse, associated with the picture that is presently displayed, occurs too late in the cycle and, therefore, cannot provide time reference for the reset pulse, when top panning is required. Therefore, a vertical synchronization pulse that is associated with the picture displayed during the immediately preceding period of the deflection current is selected to provide such time reference.

In a standard broadcast signal, for example, that conforms to the NTSC standard, every consecutively occurring pair of vertical synchronization pulses are separated by an interval having the same length in each period. Therefore, selecting the aforementioned vertical synchronization pulse in the Rodriguez-Cavazos et al., arrangement that is associated with the preceding period of the deflection current for the purpose of top panning will not necessarily be subject to picture degradation. However, when the source of the video signal is, for example, a video cassette player operating in a freeze frame mode or a rapid scan mode, the time difference between vertical sync pulses of consecutively occurring picture fields may vary from field to field.

As explained before, in the Rodriguez-Cavazos et al., arrangement, the vertical synchronization pulse that provides the time reference is associated with the picture displayed during the immediately preceding vertical trace portion, and not with the picture presently displayed during the given trace portion. Therefore, when the intervals between vertical sync pulses of consecutively occurring picture fields do not have a constant length, improper synchronization of the deflection current may occur. The result is that the picture could shift in a vertical direction by different amounts in different periods of the vertical deflection current and consecutively displayed pictures may be subject to misalignment with one another in the vertical direction. It may be desirable to prevent such misalignment.

In accordance with an aspect of the invention, top panning is obtained in such a way that the deflection current of a given picture field is synchronized to the immediately preceding vertical sync pulse of that field. Synchronization can be obtained, for example, by starting the ramping vertical trace portion of the sawtooth signal of a D.C. coupled vertical deflection circuit at the same time relative to the immediately preceding vertical sync pulse in each field. Such immediately preceding vertical sync pulse is referred to herein as the vertical sync pulse of the present field.

In a video apparatus, embodying an aspect of the invention, a source of a video signal contains a vertical synchronization signal and a picture information signal during an image interval for displaying the picture information contained in a given image interval in corresponding locations on a screen of a video display during the given image interval. A panning signal that is indicative of a degree of panning selected from a range of values is generated. An output signal that is coupled to the video display is generated. The output signal varies during the given image interval the location on the screen where the picture information is displayed. The output signal is time shifted relative to the video signal in accordance with the panning signal when top panning is selected such that the output signal is synchronized to the picture information from the given image interval by the vertical synchronization signal that is associated with that same image interval.

In a video apparatus embodying another aspect of the invention, a vertical deflection winding is disposed on a cathode ray tube. A source of a video signal contains a vertical synchronization signal and a picture information signal for displaying on a screen of a cathode ray tube the picture information. A zoom signal that is indicative of a degree of zoom selected from a range of values is generated. A vertical deflection circuit responsive to the zoom signal and to a vertical reset signal synchronized to the vertical synchronization signal generates a vertical deflection current in the deflection winding. The vertical deflection current has a trace portion with a rate of change that varies in accordance with the zoom signal such that the duration of an interval between an instant when the vertical reset signal occurs and an instant when the trace portion begins ramping remains substantially the same at different degrees of zoom.

In the drawings:
FIGURES 1a, 1b and 1c illustrate a vertical deflection circuit, embodying an aspect of the invention;
FIGURES 2a-2e illustrate idealized waveforms useful for explaining the operation of the arrangement of FIGURE 1;
FIGURES 3a-3d illustrate waveforms useful for explaining the operation of the arrangement of FIGURE 1 when top panning is provided; and
FIGURES 4a and 4b illustrate waveforms useful for explaining the operation of the arrangement of FIGURE 1 when bottom panning is provided.

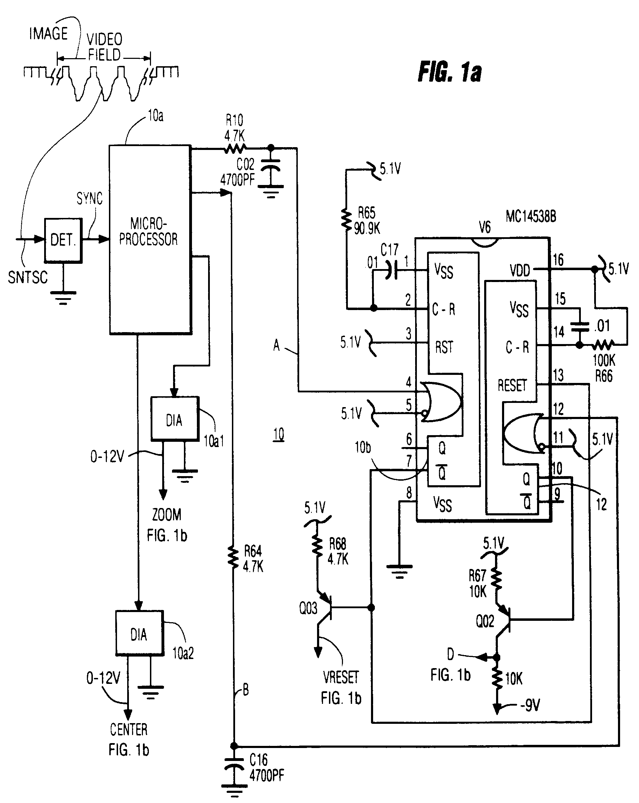

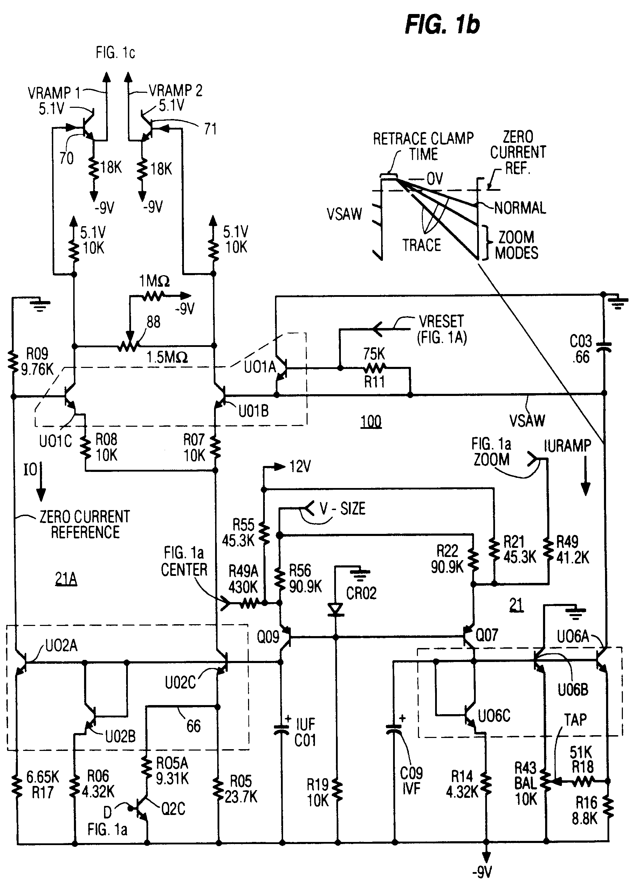

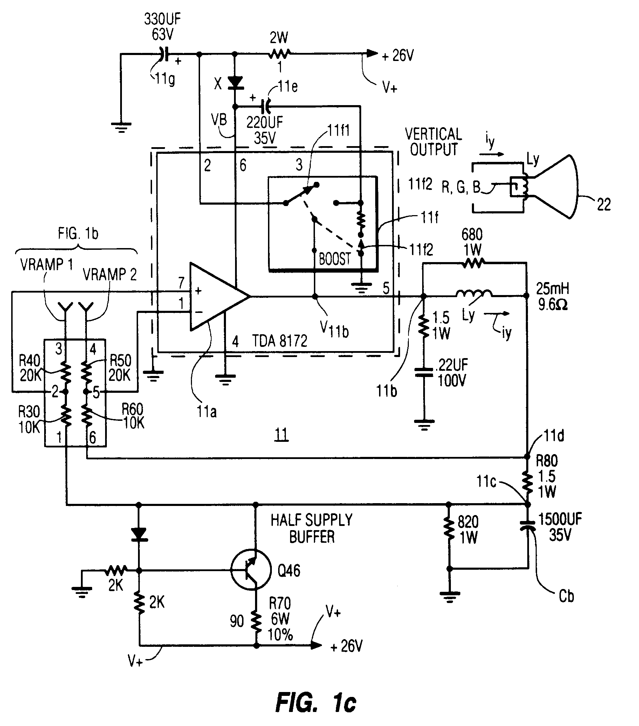

FIGURES 1a, 1b and 1c illustrate a vertical deflection circuit, embodying an aspect of the invention that includes a sawtooth generator 100. A vertical synchronizing signal SYNC of FIGURE 1a is coupled to a vertical timing generator 10. Signal SYNC is produced by a video detector 9 of a television receiver that processes a baseband television signal SNTSC, conforming to the NTSC standard, for example. Signal SNTSC contains, between consecutively occurring signals SYNC, 262 1/2 horizontal video lines that define a given picture image interval IMAGE of signal SNTSC. In NTSC type signal, the image interval contains the picture information of a single picture field. However, in a high definition television signal, not shown, the image interval may contain the picture information of, for example, a complete picture frame.

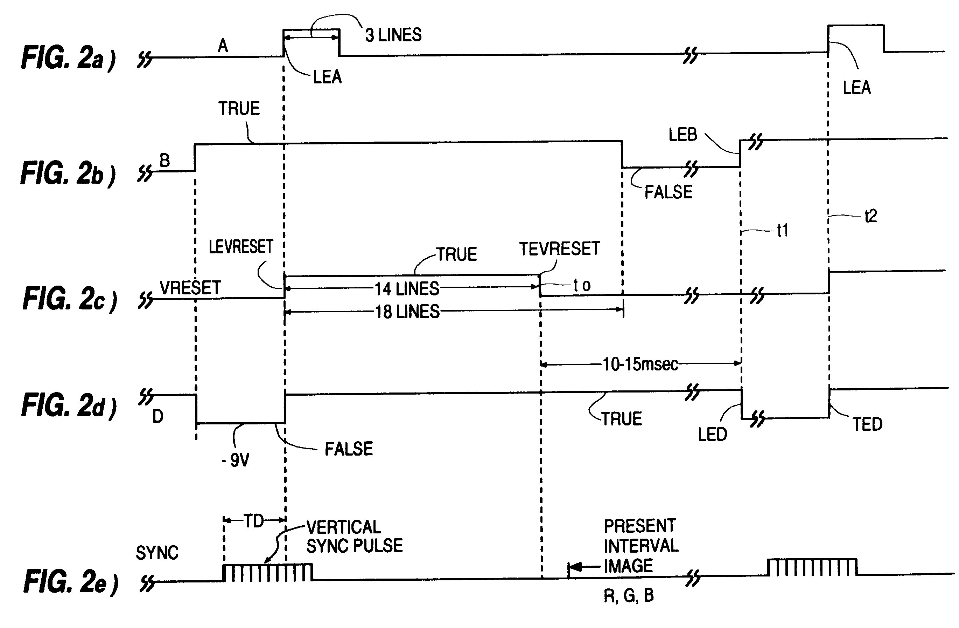

Generator 10 includes a microprocessor 10a that generates a vertical cycle synchronizing pulse signal A. Under user's control, microprocessor 10a generates pulse signal A of FIGURE 2a that is delayed by a controllable amount TD relative to pulse signal SYNC of FIGURE 2e. Similar symbols and numerals in FIGURES 1a, 1b, 1c and in FIGURES 2a-2e, that provide idealized waveforms, indicate similar items or functions. The amount by which pulse signal A of FIGURE 2a is delayed varies in accordance with the degree of panning that is required by the user. To produce signal A, the information of sync pulse SYNC that occurs immediately prior to the display of the picture information of the present vertical field is used.

Signal A of FIGURE 1a is coupled to a pulse stretcher one-shot or multivibrator flip-flop 10b that generates, through a transistor Q03, a vertical rate pulse signal VRESET, as shown in FIGURE 2c. Signal VRESET has a pulse width that is equal to about the length of 14 horizontal video lines. Signal VRESET is coupled to a base of a transistor switch U01A of FIGURE 1b. Transistor switch U01A is coupled across a capacitor C03 having a terminal that is at ground potential. In each vertical deflection cycle, signal VRESET causes a voltage VSAW across capacitor C03 to be clamped to zero volts and to maintain voltage VSAW at the zero volts level as long as pulse signal VRESET is generated. A leading edge LEVRESET of signal VRESET of FIGURE 2c initiates vertical retrace, as explained later on.

Immediately after the occurrence of trailing edge TEVRESET, transistor U01A of FIGURE 1b becomes nonconductive. A D.C. current IURAMP, produced in a collector of a transistor U06A of a voltage-to-current (V/I) converter 21, charges capacitor C03 to produce a ramping trace portion TRACE of sawtooth voltage VSAW, shown there. The rate of change of voltage VSAW is determined by the magnitude of controllable collector current IURAMP of transistor U06A.

V/I converter 21 is controlled by an analog voltage ZOOM that is produced in a digital-to-analog (D/A) converter 10a1 of FIGURE 1a. D/A converter 10a1 is controlled by microprocessor 10a. Voltage ZOOM determines the degree of zoom that is required by the user in a manner to vary the rate of change of a vertical deflection current iy of FIGURE 1c.

Voltage ZOOM of FIGURE 1b is coupled via a resistor R49 of FIGURE 1b to an emitter of a current control transistor Q07. An adjustable voltage V-SIZE that may be adjusted manually using a potentiometer, not shown, is coupled via resistor R22 to the emitter of transistor Q07 for picture height service adjustment purposes. In addition, a D.C. supply voltage of +12V is coupled to the emitter of transistor Q07 via a resistor R21. The base of transistor Q07 is coupled to a diode CR02 that develops a temperature compensating base voltage equal to the forward voltage of diode CR02. The voltages that are coupled via resistors R21, R22 and R49 produce a collector current in transistor Q07 that develops a base voltage at a base of current source transistor U06A. The base voltage of transistor U06A, that is determined by the collector current of transistor Q07, is developed in a series arrangement of a temperature compensating transistor U06C, coupled as a diode, and a resistor R14.

A resistor R16 is coupled between the emitter of transistor U06A and a -9V supply voltage. A transistor U06B has a base voltage that is equal to the base voltage of transistor U06A. A potentiometer resistor R43 is coupled between the emitter of transistor U06B and the -9V voltage. A resistor R18 is coupled between the emitter of transistor U06A and an adjustable moveable contact TAP of resistor R43.

When contact TAP is adjusted to be close to a junction between the emitter of transistor U06B and resistor R43, resistor R18 has no effect on the emitter current in transistor U06A, because the emitter voltage of transistor U06B is equal to that of transistor U06A. On the other hand, when contact TAP is adjusted to be close to the other end of resistor 43, resistor R18 is coupled in parallel with resistor R16. The adjustment of potentiometer resistor R43 varies the current gain of V/I converter 21. In this way, tolerances of sawtooth voltage producing capacitor C03 can be, advantageously, compensated.

Voltage VSAW is coupled to the base of a transistor U01B of a differential pair that also includes a transistor U01C. The base voltage of transistor U01C is developed in a resistor R09 having a terminal that is at ground potential. The values of resistor R09 and of a current I0 flowing in it determine the base voltage of transistor U01C. The base voltage of transistor U01C tracks variation of height adjustment voltage V-SIZE in a manner to maintain vertical centering unaffected. Current I0 determines the level of voltage VSAW that produces approximately zero vertical deflection current, as explained later on.

To develop current IO, a V/I converter 21A that is similar to V/I convertor 21 is utilized. A transistor Q09 produces a collector current that tracks a collector current in transistor Q07, when an adjustment in height adjustment voltage V-SIZE is made. Voltage V-SIZE is coupled to the emitters of transistors Q07 and Q09 via resistors R22 and R56, respectively. The base voltages of transistors Q09 and Q07 are equal. Transistor U02B and resistor R06 form a temperature compensated main load with respect to the collector current of transistor Q09. Similar load with respect to the collector current of transistor Q07 is formed by the network formed by transistor U06C and resistor R14. A transistor U02A of V/I converter 21A produces current I0. Advantageously, current I0 tracks variations in current IURAMP of transistor U06A in a way to maintain vertical centering unaffected when a change in height adjustment voltage V-SIZE occurs. The tracking occurs because of circuit symmetry, for example, the symmetry with respect to transistors U06A and U02A. A transistor U02C produces the emitter currents of transistors U01C and U01B. An emitter resistor R17 establishes the value of a base voltage-to-collector current ratio in transistor U02A. A resistor R49A couples a voltage CENTER, generated in a D/A converter 10a2 of FIGURE 1A, to the emitter of transistor Q09. Voltage CENTER is controlled in a manner to produce approximately equal collector currents in transistors Q09 and Q07 when the zoom mode is not selected. Voltage CENTER compensates for a non-zero offset value of voltage ZOOM when the zoom mode is not selected.

The base voltage of transistor U01C of FIGURE 1b is controlled by current I0. The values of resistor R09 and current I0 are selected in such a way that the base voltage of transistor U01C is made equal to the level of voltage VSAW at the base of transistor U01B at the vertical center, when the regular, non-zoom mode is selected. Advantageously, as a result of tracking between V/I converters 21 and 21A, any change in size adjustment voltage V-SIZE and in the 12V supply voltage does not affect a ratio between currents I0 and IURAMP. The resulting variations in currents I0 and IURAMP maintain the base voltage of transistor U10C at the level of sawtooth voltage VSAW that corresponds to vertical center for each level of voltage V-SIZE and of the 12V supply voltage. Therefore, vertical centering is, advantageously, unaffected by adjustment of voltage V-SIZE that is used for adjusting picture height.

The emitters of transistors U01B and U01C are coupled via emitter resistors R07 and R08, respectively, to a collector of transistor U02C that controls the sum of the emitter currents. The base voltage of transistor U02C is the same as that of transistor U02A. During vertical trace, the emitter voltage of transistor U02C, that is approximately equal to that of transistor U02B, produces an emitter current in transistor U02C that is determined by a parallel arrangement of a resistor R05 and a resistor R05A.

Resistor R05A of FIGURE 1b is coupled across resistor R05 via a switching transistor Q2C that in the zoom mode of operation of FIGURE 2d is nonconductive during interval t1-t2. During vertical trace, such as interval t0-t1, for zoom mode of operation, transistors U01B and U01C form a differential amplifier. The collector currents of transistors U01B and U01C develop, in corresponding collector resistors, voltages that are coupled via emitter follower transistors 71 and 70 to develop sawtooth signals VRAMP2 and VRAMP1, respectively.

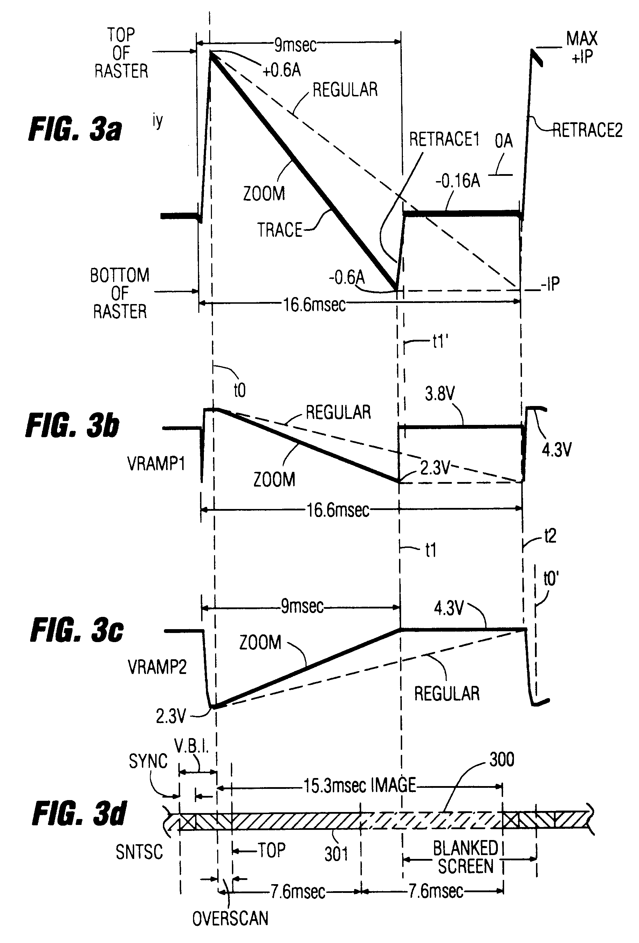

FIGURES 3a-3d illustrate waveforms useful for explaining the operation of the arrangement of FIGURE 1. Similar symbols and numerals in FIGURES 1a-1c, 2a-2c and 3a-3d indicate similar items or functions.

Signals VRAMP1 and VRAMP2 of FIGURES 3b and 3c, respectively, are complementary signals that change in opposite directions during vertical trace interval t0-t1. The waveforms of FIGURES 3b and 3c that are drawn in solid lines occur in the zoom mode of operation; whereas, the waveforms in broken lines occur in the regular or non-zoom mode of operation. Vertical trace occurs between, for example, time t0 and t1 when the zoom mode is selected, and between time t0 and time t2 when the zoom mode is not selected, as shown in the waveforms of FIGURES 3a-3c.

A D.C. coupled deflection circuit 11 of FIGURE 1c, is controlled by signals VRAMP1 and VRAMP2. In circuit 11, a deflection winding Ly provides vertical deflection in a cathode ray tube (CRT) 22 of the type W86EDV093X710 having an aspect ratio of 16 x 9.

Winding Ly is coupled in series with a deflection current sampling resistor R80. Winding Ly and resistor R80 of FIGURE 1c form a series arrangement that is coupled between an output terminal 11b of an amplifier 11a and a junction terminal 11c of a power supply decoupling capacitor Cb. A resistor R70 couples to terminal 11c via an emitter follower transistor Q46, a supply voltage V+ of, for example, +26 volts. Transistor Q46 produces a D.C. voltage at terminal 11c that is equal to about one-half of voltage V+. A junction terminal 11d, coupled between winding Ly and resistor R80, is coupled via a feedback resistor R60 to an inverting input terminal of amplifier 11a. Terminal 11c of resistor R80 is coupled via a resistor R30 to a noninverting input terminal of amplifier 11a. In this way, a negative feedback voltage that is developed across resistor R80 is applied to the input terminals of amplifier 11a. Complementary sawtooth signals VRAMP1 and VRAMP2 are coupled via resistors R40 and R50, respectively, to the noninverting and inverting input terminals, respectively, of amplifier 11a for controlling deflection current iy. Differences between signals VRAMP1 and VRAMP2 due to components mismatch or offset voltage tolerances, for example, are compensated by a potentiometer 88 that is coupled between the collectors of transistors U01B and U01C. The vertical trace portion of deflection current iy in winding Ly begins at time t0 of FIGURE 2c of signals VRAMP1 and VRAMP2 of FIGURE 1c.

Advantageously, transistors U01C and U01B of FIGURE 1b provide vertical S-correction in CRT 22. S-correction is obtained as a result of operation in a nonlinear region in transistors U01C and U01B. Transistor characteristics cause the signal gain of the differential amplifier formed by transistors U01C and U01B to be smaller, at the beginning and end of vertical trace, when the current in a corresponding one of the transistors is small, than at the center of trace.

In accordance with an aspect of the invention, when top panning is utilized in accordance therewith, signal VRESET of FIGURE 2c that controls the beginning of the trace portion of signals VRAMP1 and VRAMP2 of FIGURE 1b is produced from or synchronized to a vertical synchronization pulse signal SYNC of FIGURE 2e. Signal SYNC is associated with the picture information that immediately follows signal SYNC in signal SNTSC. Signal SYNC occurs immediately prior to an image interval IMAGE of signal SNTSC. Image interval IMAGE of FIGURE 2e contains the picture information that is, for example, presently displayed in CRT 22 of FIGURE 1c. Interval IMAGE of FIGURE 2e is referred to herein as the presently displayed image interval. Only signal SYNC of FIGURE 2e that occurs immediately prior to interval IMAGE is associated with interval IMAGE, in accordance with the standard NTSC definition of signal SNTSC of FIGURE 1a. Thus, the vertical trace portion of deflection current iy begins after the same delay time with respect to the vertical sync pulse, associated with the corresponding presently displayed image interval, in each field or image interval. As a result, deflection current iy of FIGURE 1c is properly synchronized in each period. Therefore, advantageously, field-to-field variations of sync signal SYNC will not cause vertical position variations of the displayed picture.

FIGURE 3a illustrates in solid lines an example of the waveform of deflection current iy when a zoom mode of operation is selected. FIGURE 3d illustrates schematically an example of the timing diagram of signal SNTSC of FIGURE 1a. An interval 301 of interval IMAGE of FIGURE 3d contains the picture information of the top half of the picture that would be displayed in a non-zoom mode of operation. An interval 300 contains the picture information of the bottom half of such picture.

A top panning mode of operation is obtained when a bottom portion of the displayed picture is cropped by a greater amount than a top portion. Thus, the example of FIGURES 3a and 3d depicts maximum top panning. This is so because a video line TOP that is the first video line of interval 301 of FIGURE 3d capable of providing picture information in the non-zoom mode of operation is also the first video line to provide the picture information in the maximum top panning mode of operation of FIGURES 3a and 3d.

To provide regular, non-zoom mode of operation, the beginning time of a trace portion of current iy of FIGURE 3a, shown in broken lines, may be delayed slightly less to keep the same video element at the top of the screen. The difference in delay compensates for the difference, that occurs in the beginning of vertical trace, between the rate of change of current iy of FIGURE 3a in the zoom mode of operation and that in the regular, non-zoom mode of operation.

Signal SYNC of, for example, FIGURE 3d controls the beginning time of vertical trace. Vertical trace begins, in each vertical field, at time t0 of FIGURES 3a-3d. Thus, vertical trace is synchronized on the basis of, for example, signal SYNC of FIGURE 3d that occurs immediately prior to interval 301 of image interval IMAGE. Signal SYNC is associated with the presently displayed image interval IMAGE. In contrast, in the aforementioned Rodriguez-Cavazos, et al., arrangement, the sync signal that is associated with the preceding, and not with the presently displayed image interval, is utilized for synchronizing vertical trace when top panning is provided. Therefore, the aforementioned possibility for picture misalignment is advantageously prevented.

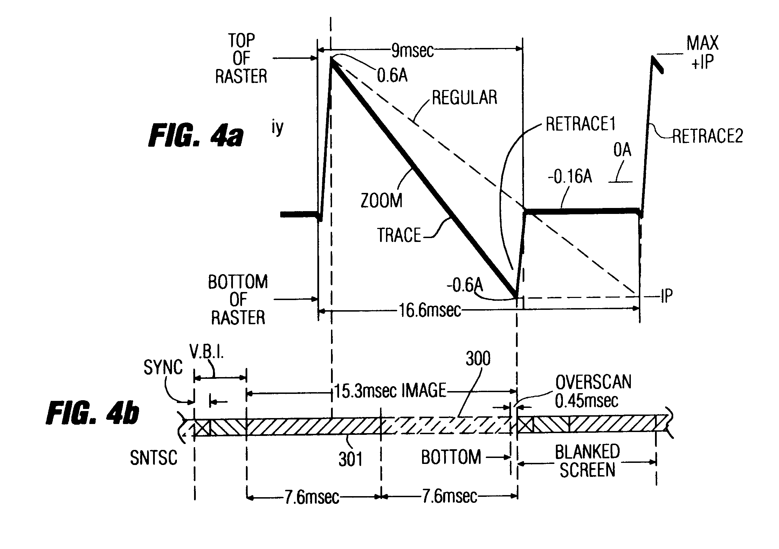

The example of FIGURES 4a and 4b illustrates the case when a video line BOTTOM that is the last video line of interval 300 of image interval IMAGE of FIGURE 4b capable of providing picture information in the non-zoom mode of operation is also the last video line displayed to provide for maximum bottom panning. Similar symbols and numerals in FIGURES 4a, 4b, 3a-3d, 2a-2e and 1a-1c indicate similar items or functions. The delay of current iy of FIGURE 4a with respect to signal SNTSC of FIGURE 4b is significantly larger than the delay of current iy of FIGURE 3a with respect to signal SNTSC of FIGURE 3d.

Advantageously, deflection circuit 11 of FIGURE 1c utilizes a positive supply voltage V+ and does not require a negative supply voltage for generating alternating current iy. In this way, the power supply, not shown, is simplified. Current limiting resistor R70 is coupled to voltage V+ for generating, via transistor Q46, the half supply voltage at terminal 11c.

It may be desirable to reduce the average or D.C. current through current limiting resistor R70 so that a large value of resistor R70 can be installed. The large value of resistor R70 is desirable to provide for current limitation so that excessive deflection current iy may be prevented when a fault condition occurs. Such fault condition may occur, for example, when output terminal 11b of amplifier 11a is shorted and assumes ground potential. It may also be desirable to prevent excessive deflection current iy in order to avoid damage to the neck of CRT 22 by a beam current strike.

Therefore, advantageously, deflection current iy is reduced or limited, in the zoom mode of operation, between time t1 of FIGURE 3a, at the end of vertical trace, and time t2, immediately prior to the beginning of the next vertical retrace. To reduce current iy, microprocessor 10a of FIGURE 1a generates a pulse signal B of FIGURE 2b having a leading edge LEB that occurs when deflection current iy of FIGURE 1c reaches a peak magnitude -Ip of FIGURE 3a corresponding to the bottom of the raster. In a manner not shown, signal B is also used for beam blanking purposes, during interval t1-t2.

Signal B and an output signal of flip-flop 10b of FIGURE 1a are coupled to a flip-flop 12 for producing, via a transistor Q2C, a pulse signal D at the base of a switching transistor Q2C of FIGURE 1b. Signal D has a leading edge LED that substantially coincides with leading edge LEB of pulse signal B of FIGURE 2b and a trailing edge TED that substantially coincides with a leading edge LEA of pulse signal A. When signal D of FIGURE 2d is at a TRUE state, transistor Q2C of FIGURE 1c is conductive. When transistor Q2C is conductive, sawtooth signals VRAMP1 and VRAMP2 vary in accordance with signal VSAW.

Between its leading edge LED and trailing edge TED, signal D is at the FALSE state and causes transistor Q2C of FIGURE 1b to be nonconductive. When transistor Q2C is nonconductive, the collector current of transistor U02C decreases, a collector voltage of transistor U02C increases and transistor U01B is turned off. Therefore, the reduced collector current of transistor U02C flows entirely through the emitter of transistor U01C. Because the collector current in transistor U02C is reduced, the voltage difference between signals VRAMP1 and VRAMP2 of FIGURES 3b and 3c, respectively, during interval t1-t2, becomes substantially smaller than prior to the occurrence of the leading edge of pulse signal B of FIGURE 1a. Therefore, deflection current iy of FIGURE 3a, that is proportional to the voltage difference between signals VRAMP1 and VRAMP2, of FIGURES 3b and 3c, respectively, becomes small such as, for example, 25% of -Ip.

Because of the fast change in signal VRAMP1 in the vicinity of time t1 of FIGURE 3b, deflection amplifier 11a ceases operating in a linear feedback mode and a voltage VB at the supply terminal is applied to deflection winding Ly. A retrace voltage V_{11b} is produced immediately after time t1 and also immediately after time t2 of FIGURE 3a, or twice in a given deflection cycle. A switch 11f1 of FIGURE 1c of a boost stage 11f causes a capacitor 11g to be coupled in series with a boost capacitor 11e. Capacitor 11e is charged via a diode X and a switch 11f2 from the +26V supply voltage V+, during vertical trace. A supply voltage, developed across filter capacitor 11g, is summed up with a voltage developed across boost capacitor 11e so as to form boost voltage VB. Voltage VB is decoupled from the +26V supply voltage V+ via diode X, when boost voltage VB is formed.

During a short interval t1-t1' of FIGURE 3a, a first partial retrace portion RETRACE1 of current iy is produced during which a first partial retrace operation is performed. During a following interval, t1'-t2, deflection amplifier 11a of FIGURE 1c operates again in a linear feedback mode of operation. Linear operation is resumed because signals VRAMP1 and VRAMP2 are at constant levels sufficiently long time for obtaining a steady state feedback mode of operation.

During a second portion RETRACE2, a second partial retrace operation is performed. At time t2, stored magnetic energy in winding Ly of FIGURE 1c is determined by the relatively small magnitude of current iy of FIGURE 3a in deflection winding Ly of FIGURE 1c. The aforementioned stored magnetic energy at time t2 of FIGURE 3a is used to activate switch 11f1 for generating vertical retrace voltage V_{11b} at terminal 11b of FIGURE 1c that is larger than voltage V+. As previously discussed, switch 11f1 produces boost voltage VB when retrace voltage V_{11b} at terminal 11b becomes larger than voltage V+.

Advantageously, current iy at time t2 of FIGURE 3a has a low but non-zero, negative level. The negative polarity of current is at time t2 causes retrace voltage V_{11b} of FIGURE 1c to be at the required polarity for activating switch 11f1. Boost voltage VB that is approximately equal to twice the value of voltage V+ is applied to the transistor output stage, not shown, of amplifier 11a. Advantageously, voltage VB reduces the length of second retrace portion RETRACE2 of FIGURE 3a needed for deflection current iy to attain the positive peak level +Ip, that occurs after leading edge LEA of FIGURE 2b.

Without the voltage boost retrace speed-up function, when non-zoom or a small degree of zoom is selected, the time available for retrace portion RETRACE2 of FIGURE 3a might not be sufficient for performing the retrace operation. When the small degree of zoom is selected, the time available for retrace portion RETRACE2 is shorter than when a higher degree of zoom is selected. Thus, advantageously, the reduction in the average value of current iy of FIGURE 3a is accomplished without sacrificing the advantageous usage of the voltage boost function.

The voltage boost function is also utilized, during interval t1-t1', in retrace portion RETRACE 1. Interval t1-t1' occurs immediately after trace interval t0-t1. Thus, each of retrace portions RETRACE1 and RETRACE2 is speeded up by the operation of boost stage 11f.

## Claims

1. Video apparatus, comprising:
a video display having a screen (22,Fig. 1c);
a source of a video signal (SNTSC, Fig. 1a) containing a vertical synchronization signal (SYNC, Fig. 2e) and a picture information signal during an image interval for displaying the picture information contained in a given image interval (IMAGE, Fig. 3d) in corresponding locations on said screen during said given image interval;
means (10a) for generating a panning signal (in 10a, Fig. 1a) that is indicative of a degree of panning selected from a range of values; and characterized by
means (10a) responsive to said panning signal and to said vertical synchronization signal for generating an output signal (A, Fig. 2a) that is coupled to said video display for varying, during said given image interval, the location on said screen where the picture information is displayed, said output signal being time shifted (TD, Fig. 2e) relative to said video signal in accordance with said panning signal when top panning is selected such that said output signal is synchronized to the picture information from said given image interval by the vertical synchronization signal (SYNC) that is associated with that same image interval.

2. An apparatus according to Claim 1 further characterizd by, a vertical deflection winding (Ly, Fig. 1c) mounted on a neck of a cathode ray tube wherein said output signal generating means (10a) is coupled to said deflection winding for generating a vertical deflection current (iy, Fig. 1c) in said deflection winding that varies the vertical location of an electron beam on said display screen (22,Fig. 1c).

3. Video apparatus, comprising:
a cathode ray tube;
a vertical deflection winding (Ly,Fig. 1c) disposed on said cathode ray tube;
a source of a video signal (SNTSC, Fig. 1a) containing a vertical synchronization signal (SYNC, Fig. 2e) and a picture information signal during an image interval (301, Fig. 3d) for displaying on a screen (22,Fig. 1c) of said cathode ray tube the picture information contained in said image interval;
means (10a, Fig. 1a) for generating a panning signal (PAN, Fig. 1a) that is indicative of a degree of panning selected from a range of values; and characterized in that
a vertical deflection circuit (11,Fig. 1c) responsive to said panning signal and to said vertical synchronization signal (SYNC, Fig. 1a) for generating a vertical deflection current (iy, Fig. 3a) in said deflection winding that is time-shifted (TD, Fig. 2e) relative to said video signal in accordance with said panning signal when top panning is selected such that said deflection current is synchronized in a deflection cycle to the picture information from a given image interval (IMAGE, Fig. 3d) by the vertical synchronization signal (SYNC, Fig. 3d) that is associated with that same image interval.

4. An apparatus according to Claim 3 characterized in that the top panning (TOP, Fig. 3d) is selected in a zoom (ZOOM, Fig. 3a) mode of operation.

5. An apparatus according to Claim 3 characterized in that each image interval (IMAGE, Fig. 3d) occurs between a corresponding pair of vertical synchronization signals, and one of said pair (SYNC, Fig. 3d) that occurs immediately prior to said given image interval is associated with said given image interval.

6. An apparatus according to Claim 3 further characterized by, a sawtooth generator (100,Fig. 1b) for generating a sawtooth signal (VSAW) that is coupled to said deflection winding (Ly, Fig. 1c), means (10a, Fig. 1a) responsive to said vertical synchronization signal (SYNC, Fig. 1a) for time-shifting said vertical synchronization signal by an amount (TD, Fig. 2e) that is determined by the required degree of panning to generate a time-shifted control signal (VRESET, Fig. 2c), said time shifted control signal being coupled to said sawtooth generator to synchronize said sawtooth signal.

7. An apparatus according to Claim 6 characterized in that said sawtooth generator (100, Fig. 1b) comprises an integrating capacitor (C03), means (VOGA) for generating a current (IURAMP) in said capacitor to produce a trace portion (TRACE) of said sawtooth signal and a switch (UO1A) responsive to said time-shifted control signal (VRESET) for producing a retrace portion of said sawtooth signal such that a beginning of said trace portion is synchronized to a pulse of said time-shifted control signal that is derived from said vertical synchronization signal (SYNC, Fig. 2e) associated with said given image interval (IMAGE, Fig. 2e).

8. An apparatus according to Claim 6 characterized in that said sawtooth signal generator (100,Fig. 1b) is D.C.-coupled to said deflection winding (Ly, Fig. 1c) form a D.C.-coupled vertical deflection circuit with respect to said sawtooth signal (VSAW.

9. An apparatus according to Claim 3 characterized in that said deflection current generating means (11, Fig. 1c) is responsive to a zoom control signal (ZOOM, Fig. 1b) for varying a rate of change of a trace portion (TRACE)of said deflection current (iy) in accordance with a degree of zoom that is required.

10. An apparatus according to Claim 3 characterized in that said screen (22) has an aspect ratio (16:9) that is different from that contained in said given image interval (4:3).

11. An apparatus according to Claim 3 characterized in that said vertical synchronization signal (SYNC) that is associated with said given image interval (IMAGE) occurs immediately prior to a top portion (TOP) of said given image interval (IMAGE).

12. An apparatus according to Claim 3 characterized in that, in each degree of panning that is selected from said range of values, said deflection current (iy) is synchronized in accordance with said vertical synchronization signal (SYNC) that is associated with said given image interval (IMAGE).

13. Video apparatus, characterized in that:
a cathode ray tube;
a vertical deflection winding (Ly) disposed on said cathode ray tube;
a source of a video signal (SNTSC) containing a vertical synchronization signal (SYNC) and a picture information signal (301, Fig. 3d) for displaying on a screen (22) of said cathode ray tube the picture information;
means for generating a zoom signal (ZOOM) that is indicative of a degree of zoom selected from a range of values; and characterized by
a vertical deflection circuit (11) responsive to said zoom signal and to said vertical synchronization signal (SYNC) for generating a vertical deflection current (iy) in said deflection winding (Ly) having a trace portion (TRACE) with a rate of change that varies in accordance with said zoom signal such that when said trace portion begins ramping (t0,, Fig. 3a), said trace portion is substantially at the same level (0.6A) at different degrees of zoom.
